# FASCICULE DE BREVET EUROPEEN

(11) **EP 3 890 348 B1**
(45) Date de publication et mention de la délivrance du brevet: **10.07.2024**
(21) Numéro de dépôt: 21166027.9
(22) Date de dépôt: 30.03.2021
(51) Int. Cl.: H04R 5/04, H04N 21/43

(54) **INSTALLATION AUDIO ET PROCEDE D'APPLICATION DE JEU DE PARAMETRES D'EGALISATION**
AUDIOINSTALLATION UND VERFAHREN ZUR ANWENDUNG EINES SATZES VON AUSGLEICHSPARAMETERN
AUDIO INSTALLATION AND METHOD FOR APPLYING A SET OF EQUALISING PARAMETERS

(30) Priorité: 01.04.2020 FR 2003262
(43) Date de publication de la demande: 06.10.2021
(73) Titulaire: Sagemcom Broadband SAS, 92270 Bois-Colombes (FR)
(72) Inventeur: BERGER, Jérôme, 92500 RUEIL MALMAISON (FR)
(74) Mandataire: Cabinet Boettcher

(56) Documents cités:
- EP-A1- 1 398 931
- WO-A1-2016/196058
- US-A1- 2014 003 625
- US-A1- 2016 029 136
- US-A1- 2018 317 036

## Description

L'invention concerne le domaine de la restitution audio via un ou des équipements de restitution audio.

### ARRIERE PLAN DE L'INVENTION

Il est aujourd'hui très courant, dans les installations multimédia domestiques modernes, de connecter un équipement décodeur, de type boîtier décodeur STB à un ou plusieurs équipements de restitution audio.

En effet les équipements de restitution audio peuvent ainsi être groupés pour pouvoir diffuser simultanément un même flux audio et ainsi améliorer l'expérience acoustique de l'utilisateur. Par exemple, deux équipements de restitution audio peuvent être agencés dans des pièces différentes d'une habitation, la diffusion du flux audio de manière simultanée par lesdits équipements permettant à l'utilisateur de circuler entre les deux pièces sans interrompre son écoute.

Il est même possible de faire jouer un flux audio identique de manière différente par des équipements de restitution audio d'un même groupe en leur imposant de diffuser le flux audio avec des jeux de paramètres d'égalisation différents. Ceci permet par exemple d'accentuer les basses au niveau de l'un des équipements de restitution audio, afin de lui faire jouer le rôle d'un caisson de basses. Des exemples d'installations audio comprenant un dispositif de commande et/ou une source d'audio et au moins un ou plusieurs équipements de restitution audio sont connus de WO 2016/196058 A1, US 2016/029136 A1 ou US 2018/317036 A1.

### OBJET DE L'INVENTION

Un but de l'invention est de proposer un procédé facilitant l'application d'au moins un jeu de paramètres d'égalisation par au moins un équipement de restitution audio.

### RESUME DE L'INVENTION

En vue de la réalisation de ce but, on propose selon l'invention une installation telle que définie par la revendication 1. D'autres exemples de réalisation de l'invention sont définis dans les revendications dépendantes.

De la sorte, l'invention a recours à un dispositif distinct des équipements de restitution audio pour ordonner l'application d'un ou de jeux de paramètres en particulier pour déterminer si deux équipements de restitution audio d'un même groupe doivent appliquer ou non les mêmes jeux de paramètres d'égalisation ou des jeux différents.

Avantageusement, l'utilisateur n'a pas besoin de déterminer lui-même quels paramètres d'égalisation appliquer.

Optionnellement l'installation comprend une source audio configurée pour transmettre le flux audio à un ou des équipements de restitution audio et/ou un appareil mobile relativement aux équipements de restitution audio.

Optionnellement le dispositif est la source audio et/ou l'appareil mobile.

Optionnellement la source audio est distincte du dispositif, le dispositif contrôlant à la fois le ou les équipements de restitution audio de l'installation et à la fois la source audio.

Optionnellement la source audio est distincte des équipements de restitution audio de l'installation pour le cas où l'installation comporte la source audio, et l'appareil est distinct des équipements de restitution audio de l'installation pour le cas où l'installation comporte l'appareil.

Optionnellement l'appareil est une tablette ou un téléphone portable.

L'invention concerne également un procédé d'application d'au moins un jeu de paramètres d'égalisation, mis en oeuvre par une installation telle que précitée.

Optionnellement le procédé comporte l'étape de synchronisation de la diffusion du flux audio sur une horloge de référence.

Optionnellement l'étape de synchronisation est mise en oeuvre par l'intermédiaire d'au moins une donnée de synchronisation.

Optionnellement le flux audio est découpé en paquets et l'en-tête de chaque paquet comporte au moins une information d'horodatage, la donnée de synchronisation étant une information de correspondance entre au moins ladite information d'horodatage et l'horloge de référence.

Optionnellement le dispositif participe à la synchronisation de la diffusion du flux audio sur une horloge de référence.

Optionnellement le dispositif ordonne à l'un ou les équipements de restitution audio de jouer le flux audio de manière synchronisée sur l'horloge de référence.

Optionnellement l'ordre de jouer le flux audio de manière synchronisée sur l'horloge de référence est transmis via un deuxième message différent du premier message comprenant l'ordre d'application d'un jeu de paramètres d'égalisation donné.

Optionnellement une fois transmis l'ordre de jouer le flux audio de manière synchronisée sur l'horloge de référence, le ou les équipements de restitution audio fournissent à une source audio de l'installation au moins une requête NTP.

Optionnellement le ou les équipements de restitution audio fournissent à la source audio au moins une requête NTP de manière régulière.

Optionnellement si le flux audio est joué par un groupe d'au moins deux équipements de restitution audio le dispositif fait appliquer un jeu de paramètres différents à chaque équipement de restitution audio du groupe.

L'invention concerne également une installation pour la mise en oeuvre du procédé tel que précité.

L'invention concerne également un programme d'ordinateur comprenant des instructions qui conduisent un dispositif à exécuter le procédé tel que précité.

L'invention concerne également un support d'enregistrement lisible par ordinateur, sur lequel est enregistré le programme d'ordinateur tel que précité.

D'autres caractéristiques et avantages de l'invention ressortiront à la lecture de la description qui suit de mises en oeuvre particulières non limitatives de l'invention.

### BREVE DESCRIPTION DES DESSINS

L'invention sera mieux comprise à la lumière de la description qui suit en référence aux figures annexées parmi lesquelles :
[Fig. 1] la figure 1 représente schématiquement une installation permettant de mettre en oeuvre l'invention ;
[Fig. 2] la figure 2 représente schématiquement les différentes phases d'une première mise en oeuvre de l'invention par l'installation représentée à la figure 1 ;
[Fig. 3] la figure 3 est un diagramme de séquence représentant des messages échangés lors d'une première application de la mise en oeuvre schématisée à la figure 2 ;
[Fig. 4] la figure 4 est un diagramme de séquence représentant des messages échangés lors d'une deuxième application de la mise en oeuvre schématisée à la figure 2 ;
[Fig. 5] la figure 5 donne un exemple d'ordre de transmission d'un flux audio à au moins un équipement de restitution audio de l'installation illustrée à la figure 1 ;
[Fig. 6] la figure 6 donne un exemple de notification échangée entre une source audio et un appareil de l'installation illustrée à la figure 1 suite à l'ordre de transmission d'un flux audio tel que par exemple représenté à la figure 5 ;
[Fig. 7] la figure 7 donne un exemple d'ordre de diffusion d'un flux audio à au moins un équipement de restitution audio de l'installation illustrée à la figure 1 ;
[Fig. 8] la figure 8 donne un exemple d'ordre d'application d'un jeu de paramètres d'égalisation par au moins un équipement de restitution audio de l'installation illustrée à la figure 1 ;
[Fig. 9] la figure 9 représente schématiquement les différentes phases d'un exemple qui ne fait pas partie de l'invention.

### DESCRIPTION DETAILLEE DE L'INVENTION

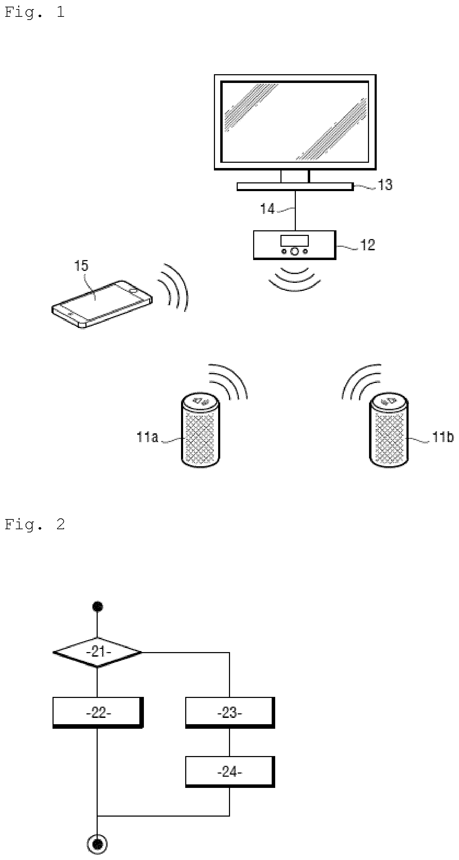

En référence à la figure 1, un exemple d'installation pouvant mettre en oeuvre l'invention va être à présent décrit.

L'installation est une installation multimédia comprenant un équipement décodeur 12 relié ici à un équipement de restitution vidéo, qui est ici en réalité un équipement de restitution audio/vidéo 13, et à au moins un équipement de restitution audio. L'équipement décodeur 12 joue ici le rôle d'une source audio pour les deux équipements de restitution audio 11a, 11b. Les équipements de restitution audio 11a, 11b sont par ailleurs distincts dans le cas présent de l'équipement décodeur 12 mais également de l'équipement de restitution audio/vidéo 13.

Par ailleurs, l'installation comporte également un appareil 15 permettant de commander au moins les équipements de restitution audio 11a, 11b et de préférence au moins les équipements de restitution audio 11a, 11b et l'équipement décodeur 12 et de préférence toute l'installation. L'appareil 15 est dans le cas présent distinct de l'équipement décodeur 12 mais également de l'équipement de restitution audio/vidéo 13 mais également de chacun des équipements de restitution audio 11a, 11b.

L'équipement décodeur 12 est ici un boîtier décodeur, l'équipement de restitution audio/vidéo 13 est une télévision, et les équipements de restitution audio 11a, 11b sont des enceintes externes et connectées audit boitier décodeur. Quant à l'appareil 15, il s'agit ici d'un téléphone portable intelligent (ou "smartphone) ou bien encore une tablette, le téléphone ou la tablette comprenant des moyens de stockage d'une application dédiée au moins au contrôle de l'équipement décodeur 12 et des équipements de restitution audio 11a, 11b, l'exécution de cette application permettant ainsi de commander au moins l'équipement décodeur 12 et les équipements de restitution audio 11a, 11b.

En service, l'équipement décodeur 12 acquiert au niveau d'une interface de communication de l'équipement décodeur 12, un flux multimédia audio/vidéo qui peut provenir d'un ou de plusieurs réseaux de diffusion. Les réseaux de diffusion peuvent être de tout type. Par exemple, le réseau de diffusion est un réseau de télévision par satellite, et l'équipement décodeur 12 reçoit un flux d'entrée audio/vidéo à travers une antenne parabolique. En variante, le réseau de diffusion est une connexion Internet et l'équipement décodeur 12 reçoit le flux d'entrée audio/vidéo à travers ladite connexion Internet. Selon une autre variante, le réseau de diffusion est un réseau de télévision numérique terrestre (TNT) ou un réseau de télévision par câble. De manière globale, le réseau de diffusion peut être de source diverse : satellite, câble, IP, TNT (réseau de Télévision Numérique Terrestre), flux audio/vidéo stocké localement, etc.

L'équipement décodeur 12 comporte des moyens de traitement permettant entre autres de traiter le flux d'entrée audio/vidéo.

Par ailleurs l'équipement de restitution audio/vidéo 13 est connecté à une sortie audio/vidéo de l'équipement décodeur 12 et chaque équipement de restitution audio 11a, 11b est connecté à une sortie audio de l'équipement décodeur 12.

Par "sortie audio/vidéo", on entend une sortie sur laquelle l'équipement décodeur 12 applique au moins un signal audio/vidéo pour mettre en oeuvre une restitution audio et une restitution vidéo via (au moins) un équipement de restitution audio/vidéo 13 (ici la télévision). Par "sortie audio", on entend une sortie sur laquelle l'équipement décodeur 12 applique au moins un signal audio pour mettre en oeuvre une restitution audio via (au moins) un équipement de restitution audio 11a, 11b (ici l'enceinte externe). En conséquence, chaque équipement de restitution audio 11a, 11b comporte des moyens de traitement qui lui sont propres pour traiter le flux audio transmis par l'équipement décodeur 12.

Par ailleurs, comme indiqué, l'appareil 15 permet de transmettre des ordres à l'équipement décodeur 12 et aux équipements de restitution audio 11a, 11b ce qui permet à l'utilisateur de pouvoir gérer l'installation via l'appareil 15 par exemple via une interface graphique de commande de l'appareil 15 tel qu'un écran tactile de l'appareil 15.

Optionnellement, l'appareil 15 communique avec les équipements de restitution audio 11a, 11b et/ou avec l'équipement décodeur 12 à l'aide d'un protocole de commande tel que JSON-RPC ou CORBA. Ce protocole de commande permet à l'appareil 15 de recevoir des informations de la part des équipements de restitution audio 11a, 11b et de l'équipement décodeur 12 et de leur envoyer des instructions.

Typiquement, l'utilisateur peut envoyer un ordre à l'équipement décodeur 12 via l'appareil 15 afin que l'équipement décodeur 12 envoie un flux audio vers un seul des équipements de restitution audio 11a (l'équipement de restitution audio 11a étant alors isolé). L'utilisateur peut aussi utiliser l'appareil 15 pour envoyer un ordre à l'équipement décodeur 12 afin qu'il envoie un flux audio et des informations de synchronisation vers les au moins deux équipements de restitution audio 11a et 11b simultanément ; dans ce cas, l'équipement décodeur 12 peut envoyer des canaux différents aux différents équipements de restitution audio 11a, 11b (qui formeront alors conjointement un groupe d'équipement de restitution audio). Par exemple dans le cas d'un flux audio stéréo comportant deux canaux, l'équipement décodeur 12 peut envoyer le canal de gauche à l'un des équipements de restitution audio 11a et le canal de droite à un autre des équipements de restitution audio 11b.

On retient que l'on considère ici que les équipements de restitution audio 11a, 11b retranscrivant un même flux audio appartiennent à un même groupe et ce que chaque équipement de restitution audio 11a, 11b retranscrive le flux dans son intégralité ou le retranscrive partiellement par diffusion d'un seul des canaux dudit flux (dans le cas par exemple d'un flux stéréo).

Selon les configurations commandées par l'utilisateur, les groupes d'équipement de restitution audio 11a, 11b peuvent donc évoluer dans le temps.

Afin de permettre la synchronisation entre les équipements de restitution audio 11a, 11b de l'installation et/ou entre plusieurs flux (audio et/ou vidéo) circulant dans l'installation, des données de synchronisation sont échangées au moins entre l'équipement décodeur 12 et les équipements de restitution audio 11a, 11b d'une part et entre l'équipement décodeur 12 et l'équipement de restitution audio/vidéo 13 d'autre part.

Selon un mode particulier de réalisation, l'équipement décodeur 12 envoie un flux audio à un ou des équipements de restitution audio 11a, 11b en utilisant un protocole RTP. Ce protocole prévoit en effet que le flux audio soit découpé en paquets et que l'en-tête de chaque paquet comporte des données de synchronisation sous la forme d'un champ d'horodatage (champ "timestamp" décrit dans la section 5.1 de la RFC 3550 associée audit protocole).

Selon un autre mode particulier de réalisation, l'équipement décodeur 12 envoie un flux audio à un ou des équipements de restitution audio sous la forme d'un flux "transport" MPEG transmis dans des paquets UDP, le flux "transport" MPEG permettant lui aussi d'associer des données de synchronisation (sous la forme d'un horodatage) aux différents paquets.

Par ailleurs, les données de synchronisation ne comportent pas uniquement l'horodatage mais également une information caractéristique d'une horloge de référence. Cette information est par exemple une information de correspondance entre l'horodatage des en-têtes RTP ou MPEG des paquets et ladite horloge de référence. Dans le cas présent, l'horloge de référence est l'horloge interne de l'équipement décodeur 12.

En outre, les données de synchronisation comportent également directement l'horloge de référence.

Par exemple, l'équipement décodeur 12 envoie directement aux équipements de restitution audio 11a, 11b :
· le flux audio sous la forme de paquets via un protocole RTP ou MPEG ;
· son horloge en utilisant un protocole NTP ;
· une information de correspondance entre les informations d'horodatage des en-têtes RTP ou MPEG et ladite horloge NTP.

Optionnellement, l'équipement décodeur 12 envoie l'information de correspondance en utilisant un protocole de type protocole RTCP (protocole RTCP tel que décrit à la section 6.4.1 de la RFC 3550).

Selon un autre exemple, pour le cas où l'appareil 15 communique avec les équipements de restitution audio 11a, 11b et l'équipement décodeur 12 à l'aide d'un protocole de commande, alors l'appareil 15 interroge l'équipement décodeur 12 via le protocole de commande pour connaître l'information de correspondance entre les informations d'horodatage et l'horloge NTP, puis l'appareil 15 communique ladite information de correspondance aux équipements de restitution audio 11a, 11b via ledit protocole de commande. L'équipement décodeur 12 ne transmet alors directement que le flux audio et son horloge aux équipements de restitution audio.

La connexion entre l'équipement décodeur 12 et l'équipement de restitution audio/vidéo 13 peut être filaire ou sans fil. Tout type de technologie peut être utilisé pour réaliser cette connexion : optique, radioélectrique, etc. La connexion peut ainsi avoir différentes natures "physiques" (par exemple en HDMI, *Toslink,* RCA, etc.) et/ou utiliser différents protocoles "informatiques" (par exemple en *Bluetooth,* UPnP, *Airplay, Chromecast,* Wifi, etc).

La connexion entre l'équipement décodeur 12 et chaque équipement de restitution audio 11a, 11b, par lequel circule la liaison audio, est ici non filaire. Tout type de technologie peut être utilisé pour réaliser cette connexion : optique, radioélectrique, etc. Le canal peut ainsi utiliser différents protocoles "informatiques" (par exemple en *Bluetooth,* UPnP, *Airplay, Chromecast,* Wifi, etc). Alternativement, la connexion pourra être filaire par exemple via un protocole Ethernet.

Ainsi et selon une option non limitative, l'équipement de restitution audio/vidéo 13 est en relation HDMI 14 avec l'équipement décodeur 12 et les équipements de restitution audio 11a, 11b sont connectés par un réseau local à chaque équipement de restitution audio/vidéo 13. Le réseau local est par exemple un réseau sans fil de type Wi-Fi. Selon une autre variante, le réseau local comporte un routeur Wi-Fi, l'équipement décodeur 12 est relié audit routeur Wi-Fi par une connexion filaire de type Ethernet ou est relié au routeur par une connexion sans fil de type Wi-Fi. Par ailleurs, et indépendamment de la liaison entre le routeur et l'équipement décodeur 12, les équipements de restitution audio 11a, 11b sont connectés au routeur Wi-Fi par une connexion sans fil de type Wi-Fi ou par une connexion filaire de type Ethernet. De la même manière, l'appareil 15 communique avec l'équipement décodeur 12 et avec les équipements de restitution audio 11a, 11b via des communications préférentiellement non filaires. Tout type de technologie peut être utilisé pour réaliser ces communications : optique, radioélectrique, etc. Ces communications peuvent ainsi utiliser différents protocoles "informatiques" (par exemple en *Bluetooth,* UPnP, *Airplay, Chromecast,* Wifi, etc). Ainsi et selon une option non limitative, l'appareil 15 est également connecté via le réseau local à l'équipement décodeur 12 et aux différents équipements de restitution audio 11a, 11b.

On va à présent s'attacher à décrire la gestion des différents équipements de restitution audio 11a, 11b de l'installation.

En référence à la figure 2, l'appareil 15 met en oeuvre les phases suivantes.

À une phase 21, l'appareil 15 détermine si un flux audio donné est joué par un seul équipement de restitution audio ou par un groupe de plusieurs équipements de restitution audio.

Comme déjà indiqué, l'appareil 15 joue ici le rôle d'un contrôleur d'au moins les équipements de restitution audio 11a, 11b. En conséquence, l'appareil 15 est apte à associer ou à dissocier les équipements de restitution audio 11a, 11b au sein d'au moins un groupe en réponse à des actions de l'utilisateur (par exemple via l'interface graphique de commande de l'appareil 15). Dès lors, l'appareil 15 connaît nécessairement la configuration du ou des groupes et la présence et/ou le rôle de chaque équipement de restitution audio 11a, 11b au sein du ou des groupes de sorte que la mise en oeuvre de la phase 21 est aisée pour l'appareil 15.

Si le flux audio est joué par un seul équipement de restitution audio 11a alors l'appareil passe à la phase 22. Si le flux audio est joué par le groupe (i.e. est joué simultanément par tous les équipements de restitution audio 11a, 11b formant ledit groupe), l'appareil 15 passe à la phase 23.

À la phase 22, l'appareil 15 envoie à l'équipement de restitution audio 11a l'ordre d'appliquer un jeu de paramètres d'égalisation. Ce jeu est donc adapté au fait que l'équipement de restitution audio 11a joue l'intégralité du flux audio. Par exemple, l'appareil 15 possède en mémoire une table décrivant le jeu de paramètres d'égalisation à appliquer dans le cas d'un équipement de restitution audio isolé. En conséquence, l'appareil 15 lit dans ladite table les paramètres à appliquer pour ledit équipement de restitution audio et envoie ledit jeu de paramètres à l'équipement de restitution audio.

À la phase 23, l'appareil 15 détermine les paramètres d'égalisation à appliquer par chaque équipement de restitution audio 11a, 11b. Ces paramètres peuvent être les mêmes pour les deux équipements de restitution audio 11a, 11b (par exemple si l'utilisateur a requis une utilisation stéréo des deux équipements de restitution audio 11a, 11b) ou bien être différents pour les deux équipements de restitution audio 11a, 11b (par exemple si l'utilisateur a requis qu'un des équipements de restitution audio soit un caisson de basses et l'autre un haut-parleur médium ou aigu). Par exemple l'appareil 15 possède en mémoire une table décrivant les jeux de paramètres à appliquer par chaque équipement de restitution audio en fonction de la configuration du groupe et du rôle de chaque équipement de restitution audio au sein du groupe. Pour chaque équipement de restitution audio, l'appareil 15 lit dans ladite table les paramètres à appliquer pour chaque équipement de restitution audio.

L'appareil 15 pourra à cet effet déjà connaître le rôle d'un équipement de restitution audio donné au sein d'un groupe donné comme indiqué précédemment et/ou interroger ledit équipement de restitution audio pour lui demander son rôle au sein dudit groupe donné.

Au cours de la phase 24, l'appareil 15 envoie à chaque équipement de restitution audio 11a et 11b l'ordre d'appliquer le jeu de paramètres d'égalisation qui correspond audit équipement et tel que déterminé à la phase 23.

On retient donc que l'utilisateur n'intervient à aucun moment dans la définition des paramètres à faire appliquer à chaque équipement de restitution audio 11a, 11b.

C'est l'appareil 15 qui effectue ce travail suite à un ordre de configuration éventuellement fourni en amont par l'utilisateur, ordre généraliste (quel(s) équipement(s) joue(nt) le flux audio ? configuration mono ou stéréo ? présence d'un caisson de basse ? d'un haut-parleur aigu ? d'un haut-parleur medium ? ...) qui est donc aisé à prendre pour l'utilisateur.

Le procédé est ainsi entièrement automatique une fois que l'utilisateur a indiqué la configuration avec laquelle il souhaitait voir jouer le flux audio. Ceci permet de façon simple, rapide et efficace de faire appliquer un ou des jeux de paramètres à l'équipement de restitution audio ou au groupe d'équipements de restitution audio jouant un même flux audio.

Par ailleurs le procédé ainsi décrit, mis en oeuvre grâce à l'appareil 15, permet aux équipements de restitution audio 11a, 11b d'appliquer automatiquement les bons paramètres d'égalisation sans intervention de l'utilisateur mais également sans que lesdits équipements de restitution audio 11a, 11b aient besoin de déterminer s'ils font partie d'un groupe ou s'ils jouent seul le flux audio. De façon avantageuse, le procédé ainsi décrit peut donc être mis en oeuvre avec des équipements de restitution audio 11a, 11b existants du commerce sans les modifier.

Selon une variante, c'est la source audio (dans le cas présent l'équipement décodeur 12) qui met en oeuvre les différentes phases illustrées à la figure 2.

En ce qui concerne la mise en oeuvre de la phase 21, la source de flux audio est configurée, de par sa nature, pour envoyer le flux audio à un ou plusieurs équipements de restitution audio. En conséquence, la source audio sait si elle est configurée pour envoyer le flux audio à un seul équipement de restitution audio, auquel cas elle passe à la phase 22, ou si elle est configurée pour envoyer le flux audio simultanément à plusieurs équipements de restitution audio, auquel cas elle passe à la phase 23.

Pour les phases 22 à 24, la source audio peut contenir elle-même la table en mémoire et/ou interroger l'appareil 15 qui possède lui-même la table.

Par exemple, la source audio pouvant être configurée pour envoyer des parties différentes d'un flux audio à différents équipements de restitution audio, elle peut donc déterminer le rôle de chaque équipement de restitution audio au sein d'un groupe en fonction de la partie du flux audio qu'elle lui envoie et ainsi en déduire quel jeu de paramètres faire appliquer. Alternativement ou en complément, la source audio interroge chaque équipement de restitution audio pour lui demander son rôle au sein d'un groupe donné et ainsi en déduire quel jeu de paramètres faire appliquer.

De façon avantageuse, les phases précitées (qu'elles soient mises en oeuvre par l'appareil 15 et/ou la source audio) sont mises en oeuvre de manière automatique sans étape de mesure et sans intervention de l'utilisateur (une fois que l'utilisateur a commandé la configuration avec laquelle il souhaitait voir jouer le flux audio).

De préférence, les phases précitées (qu'elles soient mises en oeuvre par l'appareil 15 et/ou la source audio) sont mises de nouveau en oeuvre à chaque nouvelle demande de diffusion d'un flux audio par l'utilisateur et/ou à chaque nouvelle demande de modification de la configuration de l'installation par l'utilisateur.

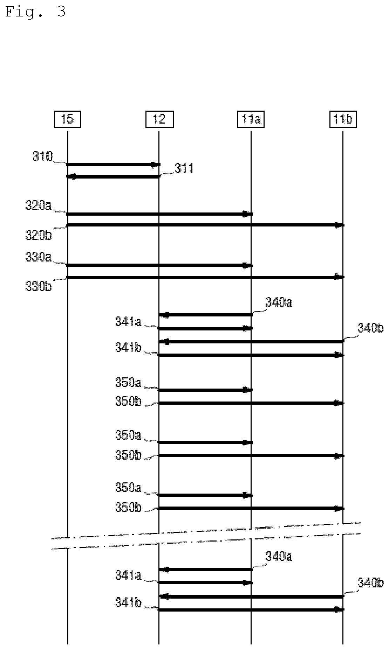

Par ailleurs, on a vu que les données de synchronisation pouvaient ne transiter qu'entre l'équipement décodeur 12 et les équipements de restitution audio 11a, 11b, ou transiter au moins en partie par l'appareil 15. Dans ce dernier cas où l'appareil 15 ordonne non seulement l'application de jeu(x) de paramètre(s) mais gère également au moins en partie la synchronisation d'un flux audio donné, le procédé précité peut optionnellement comporter des étapes supplémentaires qui vont être décrites en relation avec la figure 3.

Ainsi si l'utilisateur a requis une lecture synchronisée d'un flux audio par les deux équipements de restitution audio 11a, 11b (qui se retrouvent donc groupés dans un même groupe), l'appareil 15 ordonne à l'équipement décodeur 12 d'envoyer ledit flux audio à destination desdits équipements de restitution audio 11a, 11b. Typiquement, l'appareil 15 envoie un message 310 à destination de l'équipement décodeur 12 de commande d'envoi du flux audio à destination des équipements de restitution audio 11a et 11b. Un tel message 310 peut par exemple être transmis par JSON-RPC.

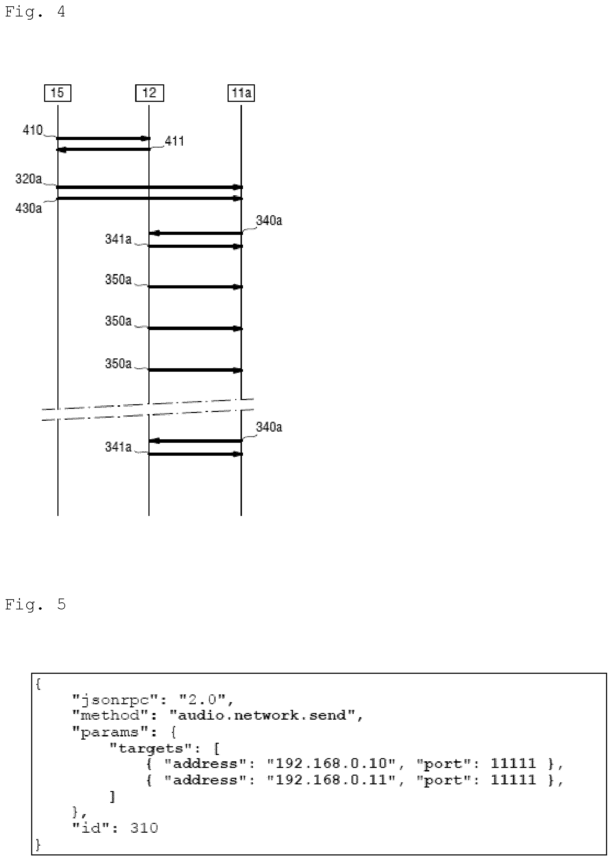

Un exemple d'un tel message 310 est illustré à la figure 5. Le paramètre "targets" d'un tel message contient une liste d'équipements de restitution audio vers lesquels le flux audio doit être envoyé par l'équipement décodeur 12. Pour chaque équipement de restitution audio, cette liste contient un champ "address" qui contient l'adresse IP de l'équipement de restitution audio et un champ "port" qui contient le port UDP sur lequel l'équipement de restitution audio recevra le flux. L'ordre peut contenir d'autres paramètres, par exemple une URI désignant le flux audio à envoyer. Alternativement, le flux audio à envoyer peut être implicite : par exemple pour le cas où l'équipement décodeur 12 est un décodeur de télévision, le flux audio à envoyer peut être défini implicitement comme étant la bande son de la vidéo en cours de lecture par l'équipement décodeur 12.

L'équipement décodeur 12 transmet alors son horloge aux équipements de restitution audio.

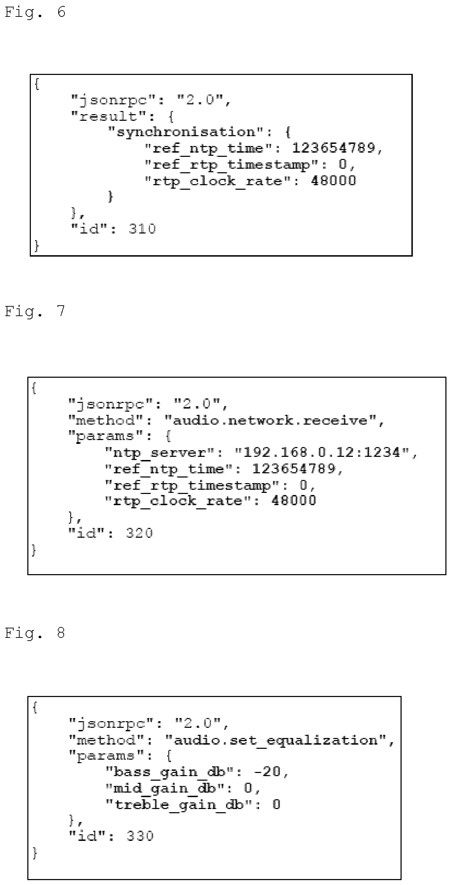

Selon une deuxième étape, en réponse au message 310, l'équipement décodeur 12 transmet également des données de synchronisation à l'appareil 15. On a précédemment fourni des exemples possibles de telles données. Par exemple, l'équipement décodeur 12 transmet via un message 311 à l'appareil 15 une information de correspondance entre des informations d'horodatage de paquets RTP et l'horloge de l'équipement décodeur 12 (type horloge NTP). Un exemple de ce message 311 est illustré à la figure 6. Les paramètres "ref_ntp_time" et "ref_rtp_timestamp" de ce message représentent l'information de correspondance entre les informations d'horodatage RTP et l'horloge NTP. Spécifiquement, ces paramètres signifient que si un paquet contient une information d'horodatage RTP égale à "ref_rtp_timestamp," alors les données audio contenues dans ce paquet doivent être jouées à l'instant désigné par "ref_ntp_time." Pour l'exemple, cette réponse contient aussi un champ "rtp_clock_rate" qui définit la vitesse à laquelle l'information d'horodatage RTP est incrémentée.

Selon une troisième étape, en réponse au deuxième message 311, l'appareil 15 ordonne :
. au premier équipement de restitution audio 11a de jouer le flux audio envoyé par l'équipement décodeur 12 de manière synchronisée sur l'horloge NTP de l'équipement décodeur 12 ;
. au deuxième équipement de restitution audio 11b de jouer le flux audio envoyé par l'équipement décodeur 12 de manière synchronisée sur la même horloge NTP de l'équipement décodeur 12.

Par exemple, l'appareil 15 transmet ces ordres via respectivement un message 320a à destination du premier équipement de restitution audio 11a et un message 320b à destination du deuxième équipement de restitution audio 11b. Chacun de ces messages 320a, 320b contient ainsi l'information de correspondance entre les informations d'horodatage de paquets RTP et l'horloge NTP de l'équipement décodeur 12 récupéré par l'appareil 15 (information récupérée par l'appareil 15 à l'étape précédente) afin que les équipements de restitution audio 11a, 11b puissent se synchroniser sur une même horloge de référence (ici l'horloge NTP de l'équipement décodeur).

Un exemple de message 320a ou 320b est illustré à la figure 7. Le paramètre "ntp_server" de ce message contient l'adresse et le port du serveur NTP qui fournit l'horloge sur laquelle la lecture doit être synchronisée, dans le cas présent cette adresse est celle de l'équipement décodeur 12. Les paramètres "ref_ntp_time," "ref_rtp_timestamp" et "rtp_clock_rate" sont les mêmes que dans le message 311 décrit en référence à la figure 6.

Par ailleurs et selon une quatrième étape, l'appareil 15 transmet à chaque équipement de restitution audio 11a, 11b un ordre d'appliquer un jeu donné de paramètres d'égalisation. Cette quatrième étape correspond donc à la phase 24 qui a été décrite en référence à la figure 2. La phase 21 de détermination de diffusion du flux audio par un seul équipement de restitution audio ou par un groupe d'équipements de restitution audio a donc déjà été mise en oeuvre précédemment (par exemple avant l'envoi du message 310 ou entre l'envoi du message 310 et du message 311) et la phase 23 de détermination des paramètres d'égalisation à faire appliquer à chaque équipement de restitution audio 11a, 11b également (par exemple avant l'envoi du message 310 ou entre l'envoi du message 310 et du message 311).

Par exemple, l'appareil 15 transmet un message 330a (respectivement 330b) contenant le jeu de paramètres à faire appliquer à chaque équipement de restitution audio 11a (respectivement 11b).

Un exemple d'un tel message 330 est donné par la figure 8. Les paramètres "bass_gain_db," "mid_gain_db" et "treble_gain_db" de ce message représentent respectivement les valeurs de gains à appliquer aux fréquences basses, moyennes et aiguës. Par exemple ici on demande au premier équipement de restitution audio 11a de jouer le rôle d'un caisson de basses et on demande au deuxième équipement de restitution audio 11b d'atténuer en conséquence fortement les fréquences graves.

Selon une première variante, la troisième étape et la quatrième étape sont combinées. En conséquence un unique message contenant à la fois l'ordre d'appliquer un jeu de paramètres d'égalisation donné et l'ordre de jouer le flux audio en synchronisation avec une horloge de référence est échangé entre l'appareil 15 et le premier équipement de restitution audio 11a d'une part et entre l'appareil 15 et le deuxième équipement de restitution audio 11b d'autre part (les messages 320a et 330a sont ainsi combinés et les messages 320b et 330b sont ainsi combinés). Un moyen pour réunir plusieurs ordres au sein d'un seul message est par exemple décrit à la section 6 de la norme JSON-RPC version 2.

Selon une autre variante, les messages 320a, 320b de la troisième étape et les messages 330a, 330b de la quatrième étape peuvent être envoyés par des appareils 15 distincts, ou bien une partie des messages peut être envoyés par l'appareil 15 et une autre partie des messages par l'équipement décodeur 12.

Lors d'une cinquième étape, préférentiellement, chaque équipement de restitution audio 11a, 11b fournit à l'équipement décodeur 12 une requête NTP conforme à la RFC 1305 afin de contrôler la synchronisation entre lesdits équipements de restitution audio 11a, 11b.

Par exemple, en réponse au message 320a (respectivement 320b), l'équipement de restitution audio 11a (respectivement 11b) envoie à l'équipement décodeur 12 un message 340a (respectivement 340b) de requête NTP conforme à la RFC 1305. Avantageusement, ces messages de requête NTP sont chacun répétés régulièrement. Par exemple, ces messages de requête NTP sont répétés chacun une fois par seconde.

Lors d'une sixième étape, en réponse au message 340a (respectivement 340b), l'équipement décodeur 12 envoie à l'équipement de restitution audio 11a (respectivement 11b) un message 341a (respectivement 341b) de réponse NTP conforme à la RFC 1305.

Lors d'une septième étape, en réponse au message 310 transmis par l'appareil 15, l'équipement décodeur 12 envoie le flux audio à destination des deux équipements de restitution audio 11a, 11b, ce flux audio étant porteur de données de synchronisation de type horodatage. Par exemple, l'équipement décodeur 12 envoie à l'enceinte 11a (respectivement 11b) des messages RTP 350a (respectivement 350b) conformes à la RFC 3550 contenant à la fois le flux audio à jouer et l'horodatage associé comme ce qui a été dit précédemment.

En variante, l'équipement décodeur 12 peut transmettre ce flux audio (via potentiellement des messages RTP) plus tôt et ce dès qu'il a reçu le message 310 alors même que les deux équipements de restitution audio n'ont pas synchronisés leurs horloges avec celle de référence. Dans ce cas de figures, soit les équipements de restitution audio ignorent les messages tant que leurs horloges ne sont pas synchronisées à celles de référence soit conservent les messages jusqu'à ce que leurs horloges soient synchronisées sur celle de référence et ignorent alors les messages obsolètes (i.e. ceux dont l'horodatage est passé).

Les étapes décrites en référence à la figure 3 sont une mise en oeuvre particulière de l'invention. En effet on pourrait ne pas avoir recours à l'appareil 15 pour gérer la synchronisation qui pourrait ainsi être gérée uniquement au niveau de la source audio (ici l'équipement décodeur 12), l'appareil 15 se contentant alors de gérer l'application des jeux de paramètres.

En variante, c'est la source audio (dans le cas présent l'équipement décodeur 12) qui met en oeuvre les différentes étapes décrites ci-dessus en relation avec la figure 3, que ce soit pour l'application de jeux de paramètres comme pour la gestion de la synchronisation.

Par ailleurs, dans le cas où l'appareil 15 ordonne non seulement l'application de jeu(x) de paramètre(s) mais gère également au moins en partie la synchronisation d'un flux audio donné, et que le flux audio est diffusé par un seul équipement de restitution audio (par exemple si le flux audio lu par ledit équipement de restitution audio doit être synchronisé avec un flux vidéo), le procédé précité peut optionnellement comporter des étapes supplémentaires qui vont être décrites en relation avec la figure 4.

L'appareil 15 envoie un message 410 à destination de l'équipement décodeur 12. Ce message 410 contient une commande demandant à l'équipement décodeur 12 d'envoyer un flux audio à destination de l'équipement de restitution audio 11a.

En réponse au message 410, l'équipement décodeur 12 envoie à l'appareil 15 un message 411 contenant une information de correspondance entre les informations d'horodatage des paquets RTP et l'horloge NTP de l'équipement décodeur 12.

L'appareil 15 envoie aussi à l'équipement de restitution audio 11a un message 430a. Ce message 430a contient une commande demandant à l'équipement de restitution audio 11a d'appliquer un certain jeu de paramètres d'égalisation. Ce message a le même format que le message 330a ou 330b envoyé pour la lecture synchronisée par deux équipements de restitution audio 11a, 11b, mais contient des valeurs appropriées pour une lecture sur une seule enceinte. Par exemple en référence au message de la figure 8, la valeur du paramètre "bass_gain_db" contenu dans le message 430 est fixée à 0 pour une lecture sur un seul équipement de restitution audio 11a.

Les autres messages échangés sont identiques entre la lecture audio par un seul équipement de restitution audio 11a (en regard de la figure 4) ou la lecture audio par plusieurs équipements de restitution audio 11a, 11b (en regard de la figure 3). En particulier, les messages reçus et envoyés par le premier équipement de restitution audio 11a sont identiques dans les deux modes de fonctionnement. Ainsi pour le mode de fonctionnement à un seul équipement de restitution audio 11a, le message 320a (pour la synchronisation sur une horloge de référence) et le message 430 peuvent être réunis en un seul message contenant les deux commandes si le protocole de commande le permet.

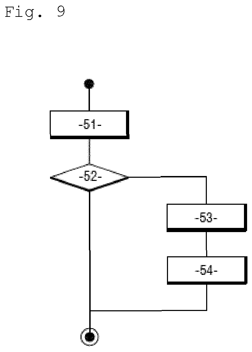

En référence à la figure 9 on va à présent décrire un exemple qui ne fait pas partie de l'invention.

Dans cet exemple, l'appareil 15 n'intervient pas pour ordonner l'application de jeux de paramètres d'égalisation. Cette fonction va être en revanche remplie par chaque équipement de restitution audio 11a, 11b à tour de rôle de sorte que chaque équipement de restitution audio 11a, 11b va faire appliquer aux autres équipements de restitution audio du même groupe un ou des jeux de paramètres d'égalisation donnés sans appliquer cet ordre à lui-même.

Lors d'une phase d'initialisation 51, le premier équipement de restitution audio 11a applique des paramètres d'égalisation appropriés pour un fonctionnement autonome isolé. Ces paramètres sont prédéfinis et non déterminables par ledit équipement de restitution audio 11a.

À une phase 52, l'équipement de restitution audio 11a détermine s'il est isolé (c'est-à-dire s'il diffuse seul un flux audio donné) ou s'il fait partie d'un groupe de plusieurs équipements de restitution audio 11a, 11b (plusieurs équipements de restitution audio 11a, 11b diffusant alors simultanément le même flux audio).

Si l'équipement de restitution audio 11a détermine qu'il fait partie d'un groupe, alors à la phase 53, l'équipement de restitution audio 11a détermine les paramètres d'égalisation que doivent appliquer les autres équipements de restitution audio du groupe mis à part lui-même (soit ici seulement l'équipement de restitution audio 11b).

Puis, à une phase 54, l'équipement de restitution audio 11a envoie à chaque autre équipement de restitution audio du groupe (ici seulement l'équipement de restitution audio 11b) l'ordre d'appliquer le jeu ou les jeux de paramètres d'égalisation déterminé(s) à la phase 53.

On retient ainsi qu'avec cet exemple ne faisant pas partie de l'invention chaque équipement de restitution audio détermine le ou les jeux de paramètres à faire appliquer aux autres équipements de restitution audio du groupe mais ne les détermine pas pour lui-même.

C'est en effet le ou les autres équipements de restitution audio du groupe qui détermineront le jeu de paramètres adéquat à faire appliquer au premier équipement de restitution audio du groupe. En effet avec cet exemple ne faisant pas partie de l'invention tous les équipements de restitution audio appliquent les phases précitées par exemple simultanément ou à tour de rôle (on pourra ainsi envisager que la phase 21 ne soit pas mise en oeuvre par un équipement de restitution audio s'il a déjà reçu un ordre d'application d'un jeu de paramètres donné suite à la mise en oeuvre d'une phase 24 par un autre équipement de restitution audio à une phase précédente).

Bien entendu, l'invention n'est pas limitée aux mises en oeuvre et modes de réalisation décrits ci-dessus et on pourra y apporter des variantes de réalisation sans sortir du cadre de l'invention comme définie dans les revendications.

Ainsi, bien qu'ici l'équipement décodeur soit un boîtier décodeur, l'équipement décodeur pourra être tout équipement capable de réaliser un décodage audio, tel qu'un décodeur audio/vidéo, un décodeur vidéonumérique et par exemple une console de jeu, un ordinateur, une *smart-*TV, une tablette numérique, un téléphone portable, un décodeur de télévision numérique, un boîtier décodeur STB, etc. De manière générale, bien qu'ici la source audio soit un équipement décodeur, la source audio pourra être tout autre équipement capable de fournir un flux audio aux équipements de restitution audio tel qu'une chaîne Hi-Fi numérique.

Bien qu'ici la source audio et l'appareil soit distincts, la source et l'appareil pourront faire partie d'un même ensemble unitaire. Selon une variante, l'appareil pourra être intégré à la source audio, par exemple être intégré à un équipement décodeur. Selon une autre variante, la source audio pourra être intégrée à l'appareil. Ainsi, cela pourra être directement l'appareil qui transmette un flux audio à au moins l'un des équipements de restitution audio. Ainsi, la source audio pourra être par exemple intégrée dans l'appareil de type téléphone portable et/ou tablette, l'appareil réalisant les fonctions "source audio" et "gestion des équipements de restitution audio" grâce à des applications adaptées. Il pourra s'agir de deux applications distinctes, l'une assurant la fonction "gestion des équipements de restitution audio" et l'autre assurant la fonction "source audio," ou bien les deux fonctions peuvent être réalisées par une même application combinant les deux fonctions. Ainsi le dispositif déterminant les jeux de paramètres à appliquer et ordonnant l'application desdits jeux pourra être une source audio directement (voire un équipement de restitution audio comme ce qui a été dit en regard de la figure 8) et non un appareil distinct. L'appareil pourra être différent de ce qui a été décrit mais sera de préférence un appareil mobile par rapport aux différents équipements de restitution audio afin qu'un utilisateur puisse facilement le manipuler (en particulier le déplacer d'une pièce à une autre). L'appareil sera ainsi de dimensions et de masse permettant à un utilisateur de le déplacer seul en le portant et de sorte que l'utilisateur puisse manipuler ledit appareil sans avoir nécessairement besoin de le poser sur un support.

De même bien qu'ici la source audio soit distincte de tous les équipements de restitution audio, la source audio et au moins l'un des équipements de restitution audio pourront ne pas être distincts et faire partie d'un même ensemble unitaire. Cela sera par exemple le cas si le ou les équipements de restitution audio traitent des flux audio directement en provenance d'un réseau externe de type Internet. On pourra ainsi avoir un ou des équipements de restitution audio qui seront des équipements de restitution audio intelligents (tels que des enceintes connectées encore appelées "smartspeakers") pouvant ainsi fonctionner sans équipement décodeur car intégrant directement les capacités d'accès à la source audio, ces équipements diffusant un flux audio directement en provenance d'un réseau externe de type Internet, ou directement en provenance d'un réseau local. Cela pourra également être le cas si la source audio comporte elle-même des haut-parleurs (par exemple si la source audio est un équipement décodeur comprenant des haut-parleurs). De même bien qu'ici l'appareil soit distinct de tous les équipements de restitution audio, l'appareil et au moins l'un des équipements de restitution audio pourront ne pas être distincts et faire partir d'un même ensemble unitaire. De préférence, l'appareil n'est pas une enceinte et n'est pas non plus intégré à une telle enceinte.

Dans tous les cas, aucun des équipements de restitution audio ne déterminera les paramètres à faire appliquer pour lui-même (ce sera soit un autre équipement, soit la source audio soit l'appareil qui le fera pour lui).

Dans un même ensemble unitaire, on pourra ainsi avoir au moins un appareil, un équipement de restitution audio et une source audio qui ne seront donc pas distincts.

L'installation pourra également comporter plusieurs sources audio et/ou plusieurs appareils sachant que les sources audio, les appareils, les équipements de restitution audio pourront être couplés entre eux dans un ou plusieurs ensemble unitaires.

Bien qu'ici l'appareil soit un téléphone portable, l'appareil pourra être tout autre élément muni ou lié à une interface graphique de commande. L'appareil pourra ainsi être de natures variées : appareil dédié, téléphone portable ou tablette exécutant une application dédiée, ordinateur exécutant une application dédiée, ou appareil tiers (console de jeux, décodeur de télévision numérique, smart TV...) ayant une fonctionnalité dédiée ou exécutant une application dédiée.

Par ailleurs, bien qu'ici l'équipement de restitution audio soit une enceinte connectée externe, ceci pourrait être un autre équipement muni d'un haut-parleur, par exemple une enceinte non connectée, une barre de son, un système audio relié à un bridge Wi-Fi/audio ...

Bien qu'ici les équipements de restitution audio soient reliés à la source audio par un réseau sans fil de type Wi-Fi, les équipements de restitution audio pourront être reliés à la source audio autrement par exemple par un réseau filaire de type Ethernet, ou par une connexion sans fil de type Bluetooth, ou tout autre moyen de connexion apte à faire transiter des données audio et, préférentiellement, des données de synchronisation.

On pourrait avoir un nombre plus important d'équipements de restitution audio et/ou de source audio et/ou d'appareils et que ce qui a été indiqué.

Les différentes communications évoquées pourront être filaires en place d'être non filaires.

On pourra transmettre les ordres entre l'appareil et les équipements de restitution audio soit directement soit indirectement en passant par la source audio. On pourra aussi transmettre les ordres entre la source audio et les équipements de restitution audio soit directement soit indirectement en passant par l'appareil.

On pourra avoir recours à d'autres protocoles que ce qui a été indiqué. Par exemple on pourra avoir recours à un ou des protocoles PTP, SPD, RTCP, RTP ... pour la synchronisation entre les équipements de restitution audio et/ou les flux circulant dans l'installation. Bien qu'ici on ait proposé à l'un des équipements de restitution audio de jouer le rôle d'un caisson de basses et au deuxième équipement de restitution audio d'atténuer en conséquence fortement les fréquences graves, les paramètres d'égalisation ne seront pas nécessairement limités à trois bandes. Ainsi l'égalisation pourra être réalisée sur un nombre de bandes quelconque supérieur ou égal à 2 (par exemple et de manière non limitative aigu, médium, basse). Les paramètres d'égalisation pourront aussi comprendre des valeurs de fréquence de coupure qui marquent la limite entre les bandes. Les équipements de restitution audio pourront aussi contenir une zone mémoire dans laquelle seront stockés plusieurs jeux de paramètres d'égalisation associés à des identifiants, le message 330 contenant alors uniquement un identifiant du jeu de paramètres à appliquer.

Bien qu'ici les données de synchronisation comportent à la fois une donnée liée à l'horodatage et à la fois une donnée liée à la correspondance entre l'horodatage et l'horloge de référence, on pourra envisager que les données de synchronisation comportent uniquement une information relative à l'horloge de référence (par exemple un timestamp qui corresponde directement à l'horloge de référence). Bien qu'ici l'horloge de référence soit l'horloge interne de la source audio, l'horloge de référence pourra être différente et par exemple être une horloge externe à l'installation telle qu'un serveur public sur Internet.

Dans le cas d'une synchronisation sur un serveur NTP, celui-ci pourra donc être un serveur public sur Internet ou bien directement l'horloge interne de la source audio. Les équipements de restitution audio pourront ainsi transmettre des requêtes NTP dans les deux cas au serveur concerné.

Par ailleurs, l'horloge interne de l'équipement décodeur pourra être différente selon l'origine du flux. Par exemple si le flux audio provient d'un flux d'entrée VOD ou si le flux audio provient d'un flux enregistré sur le disque dur de l'équipement décodeur, l'horloge de l'équipement décodeur sera alors libre et proviendra directement de son quartz. En revanche si le flux audio provient d'un flux d'entrée TV (type satellite, câble ou TNT), l'horloge de l'équipement décodeur sera asservie sur l'horloge de diffusion via des champs PCR de la norme MPEG.

On pourra envisager que ce qui a été dit pour la synchronisation des équipements de restitution audio soit également appliqué à l'équipement de restitution vidéo (ou audio/vidéo). Bien entendu, la plupart des paquets auront une information d'horodatage différente de ref_rtp_timestamp, mais l'information de correspondance permettra de calculer l'heure NTP à laquelle n'importe quel paquet devra être joué grâce à la formule : ntp_time = ref_ntp_time + (rtp_timestamp - ref_rtp_timestamp) / rtp_clock_rate

Il pourra également y avoir des conversions d'unités supplémentaires à effectuer, par exemple si ref_ntp_time est exprimé en nanosecondes alors que rtp_clock_rate est exprimé en kHz (comme c'est le cas à la figure 6).

## Revendications

1. Installation comprenant un dispositif (15) et au moins un équipement de restitution audio (11a, 11b), le dispositif étant configuré pour déterminer si un flux audio est diffusé dans l'installation par un équipement de restitution audio seul ou par un groupe d'au moins deux équipements de restitution audio (11a, 11b), le dispositif étant par ailleurs distinct desdits équipements de restitution audio, le dispositif étant par ailleurs configuré pour :
. Si le dispositif détecte que le flux audio est joué par un seul équipement de restitution audio, générer à destination dudit équipement un ordre d'application d'un jeu de paramètres d'égalisation donné ;
. Si le dispositif détecte que le flux audio est joué par un groupe d'au moins deux équipements de restitution audio, déterminer les paramètres d'égalisation à faire appliquer par chaque équipement de restitution audio dudit groupe, et générer à destination de chaque équipement de restitution audio dudit groupe un ordre d'application d'un jeu de paramètres d'égalisation donné,
les équipements de restitution audio appliquant les paramètres d'égalisation sans intervention d'un utilisateur et sans que les équipements de restitution audio n'aient besoin de déterminer s'ils font partie d'un groupe ou s'ils jouent seul le flux audio.

2. Installation selon la revendication 1, comprenant une source audio (12) configurée pour transmettre le flux audio à un ou des équipements de restitution audio et/ou un appareil mobile relativement aux équipements de restitution audio.

3. Installation selon la revendication 2, dans laquelle le dispositif est la source audio et/ou l'appareil mobile.

4. Installation selon la revendication 2, dans laquelle la source audio est distincte du dispositif, le dispositif contrôlant à la fois le ou les équipements de restitution audio de l'installation (11a, 11b) et à la fois la source audio (12).

5. Installation selon l'une des revendications 2 à 4, dans laquelle la source audio (12) est distincte des équipements de restitution audio de l'installation pour le cas où l'installation comporte la source audio (12), et l'appareil est distinct des équipements de restitution audio de l'installation pour le cas où l'installation comporte l'appareil.

6. Installation selon l'une des revendications 2 à 5, dans laquelle l'appareil est une tablette ou un téléphone portable.

7. Procédé d'application d'au moins un jeu de paramètres d'égalisation comportant au moins les étapes de :
- Déterminer par un dispositif d'une installation selon l'un des revendications 1 à 6 si un flux audio est diffusé dans l'installation par un équipement de restitution audio seul ou par un groupe d'au moins deux équipements de restitution audio (11a, 11b), le dispositif étant distinct desdits équipements de restitution audio,
- Si le dispositif détecte que le flux audio est joué par un seul équipement de restitution audio alors le dispositif génère à destination dudit équipement un ordre d'application d'un jeu de paramètres d'égalisation donné,
- Si le dispositif détecte que le flux audio est joué par un groupe d'au moins deux équipements de restitution audio alors le dispositif détermine les paramètres d'égalisation à faire appliquer par chaque équipement de restitution audio dudit groupe, et génère à destination de chaque équipement de restitution audio dudit groupe un ordre d'application d'un jeu de paramètres d'égalisation donné.

8. Procédé selon la revendication 7, comprenant une étape de synchronisation de la diffusion du flux audio sur une horloge de référence.

9. Procédé selon la revendication 8, dans lequel l'étape de synchronisation est mise en oeuvre par l'intermédiaire d'au moins une donnée de synchronisation.

10. Procédé selon la revendication 9, dans lequel le flux audio est découpé en paquets et l'en-tête de chaque paquet comporte au moins une information d'horodatage, la donnée de synchronisation étant une information de correspondance entre au moins ladite information d'horodatage et l'horloge de référence.

11. Procédé selon l'une des revendications 7 à 10, dans lequel le dispositif participe à la synchronisation de la diffusion du flux audio sur une horloge de référence.

12. Procédé selon la revendication 11, dans lequel le dispositif ordonne à l'un ou les équipements de restitution audio de jouer le flux audio de manière synchronisée sur l'horloge de référence.

13. Procédé selon l'une des revendications 7 à 12, dans lequel l'ordre de jouer le flux audio de manière synchronisée sur l'horloge de référence est transmis via un deuxième message différent du premier message comprenant l'ordre d'application d'un jeu de paramètres d'égalisation donné.

14. Procédé selon la revendication 13, dans lequel, une fois transmis l'ordre de jouer le flux audio de manière synchronisée sur l'horloge de référence, le ou les équipements de restitution audio (11a, 11b) fournissent à une source audio de l'installation au moins une requête NTP.

15. Procédé selon la revendication 14, dans lequel le ou les équipements de restitution audio (11a, 11b) fournissent à la source audio au moins une requête NTP de manière régulière.

16. Procédé selon l'une des revendications 7 à 15, dans lequel si le flux audio est joué par un groupe d'au moins deux équipements de restitution audio (11a, 11b) le dispositif fait appliquer un jeu de paramètres différents à chaque équipement de restitution audio du groupe.

17. Dispositif (15) d'une installation selon l'une des revendications 1 - 6 pour la mise en oeuvre du procédé selon l'une des revendications 7 à 16.

18. Programme d'ordinateur comprenant des instructions qui conduisent un dispositif selon la revendication 17 à exécuter le procédé selon l'une des revendications 7 à 15.

19. Support d'enregistrement lisible par ordinateur, sur lequel est enregistré le programme d'ordinateur selon la revendication 18.

## Patentansprüche

1. Installation, umfassend eine Vorrichtung (15) und mindestens ein Audiowiedergabegerät (11a, 11b), wobei die Vorrichtung ausgebildet ist, zu bestimmen, ob ein Audiostrom in der Installation von nur einem Audiowiedergabegerät oder von einer Gruppe von mindestens zwei Audiowiedergabegeräten (11a, 11b) wiedergegeben wird, wobei sich die Vorrichtung außerdem von den genannten Audiowiedergabegeräten unterscheidet, wobei die Vorrichtung ferner ausgebildet ist, um:
• wenn die Vorrichtung erfasst, dass der Audiostrom von einem einzigen Audiowiedergabegerät abgespielt wird, einen Befehl für die Anwendung eines gegebenen Satzes von Ausgleichsparametern für das genannte Gerät zu erzeugen;
• wenn die Vorrichtung erfasst, dass der Audiostrom von einer Gruppe von mindestens zwei Audiowiedergabegeräten abgespielt wird, die von jedem Audiowiedergabegerät der genannten Gruppe anzuwendenden Ausgleichsparameter zu bestimmen, und für jedes Audiowiedergerät der genannten Gruppe einen Befehl zur Anwendung eines gegebenen Satz von Ausgleichsparametern zu erzeugen,
wobei die Audiowiedergabegeräte die Ausgleichsparameter ohne Eingriff eines Nutzers anwenden und ohne dass die Audiowiedergabegeräte bestimmen müssen, ob sie Teil einer Gruppe sind oder ob sie den Audiostrom allein abspielen.

2. Installation nach Anspruch 1, umfassend eine Audioquelle (12), die ausgebildet ist, den Audiostrom an eines oder mehrere der Audiowiedergabegeräte und/oder ein in Bezug auf die Audiowiedergabegeräte mobiles Gerät zu übertragen.

3. Installation nach Anspruch 2, bei der die Vorrichtung die Audioquelle und/oder das mobile Gerät ist.

4. Installation nach Anspruch 2, bei der sich die Audioquelle von der Vorrichtung unterscheidet, wobei die Vorrichtung gleichzeitig das oder die Audiowiedergabegerät(e) (11a, 11b) und gleichzeitig die Audioquelle (12) steuert.

5. Installation nach einem der Ansprüche 2 bis 4, bei der sich die Audioquelle (12) von den Audiowiedergabegeräten der Installation für den Fall unterscheidet, in dem die Installation die Audioquelle (12) umfasst, und das Gerät sich von den Audiowiedergeräten der Installation für den Fall unterscheidet, in dem die Installation das Gerät umfasst.

6. Installation nach einem der Ansprüche 2 bis 5, bei der das Gerät ein Tablet oder ein Mobiltelefon ist.

7. Verfahren zur Anwendung mindestens eines Satzes von Ausgleichsparametern, umfassend mindestens die Schritte:
- Bestimmen mittels einer Vorrichtung einer Installation nach einem der Ansprüche 1 bis 6, ob ein Audiostrom in der Installation von einem Audiowiedergabegerät allein oder von einer Gruppe von mindestens zwei Audiowiedergabegeräten (11a, 11b) wiedergegeben wird, wobei sich die Vorrichtung von den genannten Audiowiedergabegeräten unterscheidet,
- wenn die Vorrichtung erfasst, dass der Audiostrom von einem einzigen Audiowiedergerät abgespielt wird, erzeugt dann die Vorrichtung für das genannte Gerät einen Befehl zur Anwendung eines gegebenen Satzes von Ausgleichsparametern,
- wenn die Vorrichtung erfasst, dass der Audiostrom von einer Gruppe von mindestens zwei Audiowiedergabegeräten abgespielt wird, bestimmt dann die Vorrichtung die von jedem Audiowiedergabegerät der genannten Gruppe anzuwendenden Ausgleichsparameter, und erzeugt für jedes Audiowiedergabegerät der genannten Gruppe einen Befehl zur Anwendung eines gegebenen Satzes von Ausgleichsparametern.

8. Verfahren nach Anspruch 7, das einen Synchronisationsschritt zur Synchronisation der Wiedergabe des Audiostroms mit einer Referenzuhr umfasst.

9. Verfahren nach Anspruch 8, bei dem der Synchronisationsschritt mit Hilfe von mindestens einem Synchronisationsdatenelement durchgeführt wird.

10. Verfahren nach Anspruch 9, bei dem der Audiostrom in Pakete zerlegt wird und der Kopf jedes Pakets mindestens eine Zeitstempel-Information umfasst, wobei das Synchronisationsdatenelement eine Information einer Korrespondenz zwischen mindestens der genannten Zeitstempel-Information und der Referenzuhr ist.

11. Verfahren nach einem der Ansprüche 7 bis 10, bei dem die Vorrichtung an der Synchronisation der Wiedergabe des Audiostroms mit einer Referenzuhr partizipiert.

12. Verfahren nach Anspruch 11, bei dem die Vorrichtung einem oder den Audiowiedergabegeräten befiehlt, den Audiostrom auf mit der Referenzuhr synchronisierte Weise abzuspielen.

13. Verfahren nach einem der Ansprüche 7 bis 12, bei dem der Befehl zum Abspielen des Audiostroms auf mit der Referenzuhr synchronisierte Weise über eine zweite Nachricht übertragen wird, die von der ersten Nachricht verschieden ist, die den Befehl zur Anwendung eines gegebenen Satzes von Ausgleichsparametern umfasst.

14. Verfahren nach Anspruch 13, bei dem, sobald der Befehl zum Abspielen des Audiostroms auf mit der Referenzuhr synchronisierte Weise übertragen wurde, das oder die Audiowiedergeräte (11a, 11b) mindestens eine NTP-Anfrage an eine Audioquelle der Installation liefern.

15. Verfahren nach Anspruch 14, bei dem das oder die Audiowiedergabegeräte (11a, 11b) mindestens eine NTP-Anfrage regelmäßig an die Audioquelle liefern.

16. Verfahren nach einem der Ansprüche 7 bis 15, bei dem, wenn der Audiostrom von einer Gruppe von mindestens zwei Audiowiedergabegeräten (11a, 11b) abgespielt wird, die Vorrichtung einen Satz von unterschiedlichen Parametern auf jedes Audiowiedergabegerät der Gruppe anwendet.

17. Vorrichtung (15) einer Installation nach einem der Ansprüche 1 - 6, zum Durchführen des Verfahrens nach einem der Ansprüche 7 bis 16.

18. Computerprogramm, umfassend Anweisungen, die eine Vorrichtung nach Anspruch 17 dazu veranlassen, das Verfahren nach einem der Ansprüche 7 bis 15 durchzuführen.

19. Computerlesbarer Aufzeichnungsträger, auf dem das Computerprogramm nach Anspruch 18 gespeichert ist.

## Claims

1. An installation comprising a device (15) and at least one piece of audio playback equipment (11a, 11b), the device being configured to determine whether an audio stream is played back in the installation by only one piece of audio playback equipment or by a group of at least two pieces of audio playback equipment (11a, 11b), the device being distinct from said pieces of audio playback equipment, the device also being configured:
. if the device detects that the audio stream is played back by a single piece of audio playback equipment, to generate an order for said piece of equipment to apply a given set of equalization parameters;
· if the device detects that the audio stream is played back by a group of at least two pieces of audio playback equipment, to determine the equalization parameters to be applied by each piece of audio playback equipment of said group, and to generate a respective order for each piece of audio playback equipment of said group to apply a respective given set of equalization parameters,
the pieces of audio playback equipment applying the equalization parameters without intervention from an user and also without said pieces of audio playback equipment needing to determine whether they form part of a group or whether they are playing back the audio stream on their own.

2. An installation according to claim 1, comprising an audio source (12) configured for sending the audio stream to one of the pieces of audio playback equipment and/or to a mobile appliance that is mobile relative to the pieces of audio playback equipment.

3. An installation according to claim 2, wherein the device is the audio source and/or the mobile appliance.

4. An installation according to claim 2, wherein audio source is distinct from the device, the device controlling simultaneously the audio source (12) and the piece(s) of audio playback equipment (11a, 11b) of the installation.

5. An installation according to any one of claims 2 to 4, wherein when the installation includes the audio source (12), the audio source (12) is distinct from the pieces of audio playback equipment of the installation, and when the installation includes the appliance, the appliance is distinct from the pieces of audio playback equipment of the installation.

6. An installation according to any one of claims 2 to 5, wherein the appliance is a mobile telephone or a tablet.

7. A method of applying at least one set of equalization parameters comprising the steps of .
- determining by a device of an installation according to any one of claims 1 to 6 whether an audio stream is played back in the installation by only one piece of audio playback equipment or by a group of at least two pieces of audio playback equipment (11a, 11b), the device being distinct from said pieces of audio playback equipment, the device also being configured:
. if the device detects that the audio stream is played back by a single piece of audio playback equipment, generating an order for said piece of equipment to apply a given set of equalization parameters;
. if the device detects that the audio stream is played back by a group of at least two pieces of audio playback equipment, determining the equalization parameters to be applied by each piece of audio playback equipment of said group, and to generate a respective order for each piece of audio playback equipment of said group to apply a respective given set of equalization parameters.

8. A method according to claim 7, including a synchronization step for synchronizing playback of the audio stream on a reference clock.

9. A method according to claim 8, wherein the synchronization step is performed by means of synchronization data.

10. A method according to claim 9, wherein the audio stream is split up into packets and the header of each packet includes timestamp information, the synchronization data being correspondence information about the correspondence between at least said timestamp information and the reference clock.

11. A method according to any one of claims 7 to 10, wherein the device contributes to synchronizing the playback of the audio stream on a reference clock.

12. A method according to claim 11, wherein the device orders one or more of the pieces of audio playback equipment to play the audio stream in a manner that is synchronized on the reference clock.

13. A method according to any one of claims 7 to 12, wherein the order to play the audio stream in a manner that is synchronized on the reference clock is transmitted via a second message that is different from the first message containing the order to apply a given set of equalization parameters.

14. A method according to claim 13, wherein, once the order to play the audio stream in a manner that is synchronized on the reference clock has been transmitted, the piece(s) of audio playback equipment (11a, 11b) deliver at least one NTP request to an audio source of the installation.

15. A method according to claim 14, wherein the piece(s) of audio playback equipment (11a, 11b) deliver(s) at least one NTP request to the audio source in regular manner.

16. A method according to any one of claims 7 to 15, wherein if the audio stream is played by a group of at least two pieces of audio playback equipment (11a, 11b), the device causes a set of different parameters to be applied by each piece of audio playback equipment in the group.

17. A device (15) of an installation according to any one of claims 1 to 6 for performing the method according to any one of claims 7 to 16.

18. A computer program including instructions that cause a device according to claim 17 to execute the method according to any one of claims 7 to 15.

19. A computer readable storage medium storing the computer program according to claim 18.
